# EUROPÄISCHE PATENTSCHRIFT

(11) **EP 3 450 940 B1**
(45) Veröffentlichungstag und Bekanntmachung des Hinweises auf die Patenterteilung: **07.06.2023**
(21) Anmeldenummer: 17189453.8
(22) Anmeldetag: 05.09.2017
(51) Int. Cl.: G01J 5/02, G02B 21/24, G01J 5/00

(54) **MESSVORRICHTUNG**
MEASURING DEVICE
DISPOSITIF DE MESURE

(43) Veröffentlichungstag der Anmeldung: 06.03.2019
(73) Patentinhaber: PeCon GmbH, 89155 Erbach (DE)
(72) Erfinder: Pentz, Siegwald, 89155 Erbach (DE); Steidle, Thomas, 89075 Ulm (DE); Beck, Adalbert, 89155 Erbach (DE); Zagst, Karl, 89605 Altheim (DE)
(74) Vertreter: Baur & Weber Patentanwälte PartG mbB

(56) Entgegenhaltungen:
- WO-A1-2013/148204
- WO-A2-2008/028475
- DE-A1- 3 025 685
- DE-A1-102014 017 287
- US-A1- 2012 182 412

## Beschreibung

Die Erfindung betrifft eine Messvorrichtung in einem beweglichen und höhenverstellbaren Objektivrevolver eines Umkehrmikroskops, insbesondere zur Beobachtung von lebenden Zell- oder Gewebekulturen.

Bei der Beobachtung lebender Zell- oder Gewebekulturen werden oftmals sogenannte Umkehrmikroskope eingesetzt, bei denen ein oder mehrere Objektive unterhalb einer Aufnahmevorrichtung für eine Petri-Schale oder dergleichen angeordnet sind. Mehrere Objektive werden dabei typischerweise auf einem Objektivrevolver zusammengefasst.

Um die zu beobachtenden Zellen am Mikroskop auch über längere Zeiträume unter physiologischen Bedingungen am Leben erhalten zu können, wird hierbei oftmals ein geregelter CO₂-Gehalt eingestellt, um einen definierten pH-Wert in der die lebenden Zellen aufweisenden Nährlösung einzustellen. Dies wird üblicherweise in Abhängigkeit vom Natriumhydrogencarbonat-Gehalt der Nährlösung vorgenommen. Darüber hinaus müssen in manchen Anwendungen auch der Sauerstoffgehalt eingestellt werden, der sowohl dem der Umgebungsluft als auch dem im Inneren von Körpern von Tieren oder Menschen vorherrschenden Werten entsprechen kann. Außerdem ist es manchmal auch vorgesehen, eine typischerweise möglichst hohe relative Feuchte der zugeführten Luft bereitzustellen. Schließlich stellt eine geregelte Temperatur, die bei menschlichen Zellen typischerweise 37°C beträgt, bei tierischen Zellen jedoch auch größer oder kleiner sein kann, einen wichtigen Parameter zur Regelung der Umgebungsbedingungen dar.

Aus dem allgemeinen Stand der Technik ist es bekannt, einen zum Zellkulturgefäß passenden Deckel bereitzustellen, der einen typischerweise aus Edelstahl bestehenden Außenring aufweist, der den Rahmen eines Kunststofffensters bildet. In das Kunststofffenster ist ein Pt100-Element eingelassen, das beispielsweise mittels einer aus Teflon bestehenden Dichtung im Kunststofffenster gehalten wird. Das Pt100-Element kann dabei in die Nährlösung eintauchen, so dass die Temperatur der Nährlösung als Messwert ausgegeben werden kann.

Aus der EP 2 690 167 B1 ist eine Kulturvorrichtung für ein Mikroskop bekannt, welche auf einem Objektträger des Mikroskops platziert ist. Diese beinhaltet eine Gehäuseeinheit zum Unterbringen eines Behälters, der eine Kulturlösung aufnimmt, welche die Probe enthält, und einen Deckel zum Verschließen einer oberen Öffnung der Gehäuseeinheit. Desweiteren umfasst die Kulturvorrichtung eine Oberheizung in Form einer transparenten Folie, die über einen Abschnitt des Deckels bereitgestellt ist, der dem Betrachtungsbereich entspricht, und ein Temperaturerkennungsmittel, bei dem ein dünner Drahtdetektor in das Innere der Gehäuseeinheit eindringt, und ferner in die Kulturlösung getaucht ist, die im Behälter aufgenommen ist, um die Temperatur der Kulturlösung direkt zu messen, wobei die Temperatur der Oberheizung in Form einer transparenten Folie durch ein Rückkopplungsverfahren auf der Basis der vom Temperaturerkennungsmittel erzielten Temperaturinformation gesteuert wird.

Aus der DE 10 2014 017 287 A1 ist ein temperierbares optisches Objektiv bekannt, an dessen einem zu betrachtenden Objekt zugewandten Stirnseite eine um die optische Achse der Linse angeordnete Temperierungseinrichtung vorgesehen ist, die in das zu betrachtende Objekt eindringt und das zu betrachtende Objekt kühlen oder erwärmen kann. Ein mit der Temperierungseinrichtung verbundener Temperatursensor regelt den Heiz- oder Kühlvorgang.

Aus der US 2012/0182412 A1 ist ein Mikroskop bekannt, an dem eine Sensoreinrichtung zum Ermitteln von Eigenschaften eines zu betrachtenden Objekts angeordnet ist. Die Sensoreinrichtung betrachtet das Objekt von einer Oberseite eines Probenträgers her.

Aus der WO 2008/02475 A2 ist ein Immersionsobjektiv bekannt, in dem durch eine Zuführeinrichtung ein Immersionsstrom erzeugt werden kann, dessen Temperatur durch ein Thermoelement gemessen werden kann. Da das Mikroskop und das Thermoelement mit dem zu untersuchenden Objekt in Kontakt gebracht werden, ist zum Reinigen des Immersionsmikroskops eine Spüleinrichtung vorgesehen.

Aus der WO 2013/148204 ist ein mechanisches Testinstrument für Mikroskopobjektive bekannt.

Aus der DE 30 25 685 A1 ist eine Mikroskopobjektivfassung mit drehbarer Beschriftungshülse bekannt.

Zwar ist das Erfordernis einer Keimfreiheit des Temperaturerkennungsmittels bzw. des Pt100-Elements durch geeignete Maßnahmen zur Sterilisierung durchaus beherrschbar, dies ist jedoch mit zusätzlichem Aufwand verbunden. Ein weiteres, bisher wenig beachtetes Problem besteht außerdem darin, dass aufgrund von Verdunstungskälte der nicht im Bereich der Kulturlösung befindliche Teil des Temperaturerkennungsmittels eine entsprechend niedrigere Temperatur aufweist, so dass Messfehler entstehen können.

Ausgehend von diesem Stand der Technik hat sich der Erfinder nun die Aufgabe gestellt, eine Messvorrichtung zu schaffen, die eine verbesserte Temperaturmessung insbesondere bei der Beobachtung von lebenden Zell- oder Gewebekulturen ermöglicht.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird eine Messvorrichtung angegeben, umfassend eine Funkschnittstelle, über die Daten einer berührungslosen Temperaturmessung an eine Steuereinheit übertragbar sind; einen Mikrokontroller, der mit einem Messaufnehmer verbunden ist; ein Gehäuse, wobei eine Unterseite des Gehäuses ein Aufnahmemittel zur Befestigung an einem für ein Objektiv vorgesehenen Objektivplatz in einem beweglichen und höhenverstellbaren Objektivrevolver eines Umkehrmikroskops aufweist und die an einer der Unterseite gegenüberliegenden Oberseite mit dem Messaufnehmer innerhalb des Gehäuses ausgestattet ist, mittels dessen die berührungslose Temperaturmessung an einem Boden eines Kultiviergefäßes durchführbar ist, sofern das Gehäuse am ausgewählten Objektivplatz im Objektivrevolver in einen Strahlengang des Umkehrmikroskops gebracht ist, sodass die Messvorrichtung vertikal ausgerichtet ist und sich unterhalb des Bodens des Kultiviergefäßes befindet, wobei ein Neigungssensor innerhalb des Gehäuses angeordnet ist, der ein Signal abgeben kann, das das Einbringen des Gehäuses in den Strahlengang des Umkehrmikroskops am ausgewählten Objektivplatz im Objektivrevolver anzeigt, wenn die Messvorrichtung vertikal ausgerichtet ist und sich unterhalb des Bodens des Kultiviergefäßes befindet, wobei das abgegebene Signal die Stromversorgung für den Messaufnehmer und/oder den Mikrokontroller und/oder die Funkschnittstelle so steuert, dass bei außerhalb des Strahlengangs angeordnetem Gehäuse, wenn die Messvorrichtung die vertikale Ausrichtung verlassen hat, der Stromverbrauch minimierbar ist, indem nicht mehr benötigte Komponenten abgeschaltet werden.

Demnach wird ein für ein Objektiv vorgesehener Platz eines Objektivrevolvers in einem Umkehrmikroskop durch eine Messvorrichtung ersetzt, die anstelle des Objektivs in den ansonsten zur optischen Abbildung verwendeten Strahlengang des Umkehrmikroskops, insbesondere zur Beobachtung von lebenden Zell- und/oder Gewebekulturen, gebracht werden kann, so dass von dort eine berührungslose Temperaturmessung am Boden des Kultiviergefäßes durchführt. Da sich der Boden des Kultiviergefäßes üblicherweise nach einer gewissen Zeitdauer auf gleicher Temperatur wie eine Nährlösung im Inneren des Kultiviergefäßes befindet, kann eine Temperaturmessung an der Oberfläche des Bodens des Kultiviergefäßes auch zur Bestimmung der Temperatur der Nährlösung herangezogen werden. Ein Eintauchen eines Temperatursensors in die Nährlösung, wie dies im Stand der Technik geschieht, ist nicht mehr erforderlich. Neben der Problematik des Keimbefalls wird mittels der erfindungsgemäßen Lösung auch eine genauere Temperaturmessung geschaffen, da eventuell auftretende Verdunstungskälte keinen Einfluss mehr ausüben kann. Die Möglichkeit zur genauen und zuverlässigen Temperaturmessung kann dabei auf einfache Weise in bestehende Umkehrmikroskope integriert werden, da üblicherweise einzelne Objektive im Objektivrevolver austauschbar ausgestaltet sind. Durch Entfernen eines einzelnen Objektivs kann somit die erfindungsgemäße Messvorrichtung auch bereits bei vorhandenen Systemen nachgerüstet werden.

Gemäß eines nicht erfindungsgemäßen Beispiels ist der ausgewählte Objektivplatz im Objektivrevolver mittels eines Stellmotors verstellbar. Üblicherweise erfolgt die Auswahl eines bestimmten Objektivplatzes im Objektivrevolver durch Drehen um eine Drehachse, wobei die Drehbewegung durch einen Stellmotor gesteuert werden kann. Ein manuelles Verstellen ist selbstverständlich ebenfalls möglich.

Gemäß einer weiteren Ausführungsform der Erfindung ist das Gehäuse auf seiner Oberseite so ausgeführt, dass ein Abstand zwischen dem Boden des Kultiviergefäßes und dem Messaufnehmer mittels des höhenverstellbaren Objektivrevolvers minimierbar ist.

Um eine zuverlässige Temperaturmessung zu ermöglichen, sollte der Abstand zwischen Boden des Kultiviergefäßes und dem Messaufnehmer möglichst gering sein, was beispielsweise mittels einer konischen Ausgestaltung der Oberseite des Gehäuses der Messvorrichtung erreicht werden kann.

Gemäß einer weiteren Ausführungsform der Erfindung ist im Inneren des Gehäuses eine Stromversorgung in Form einer Batterie oder eines Akkus angeordnet.

Die erfindungsgemäße Messvorrichtung verfügt demnach über eine autarke Stromversorgung, wobei eine Austauschmöglichkeit im Falle des Verwendens einer Batterie bzw. eine Nachladbarkeit bei Verwendung eines Akkus vorgesehen sein kann, wobei dies sowohl während im Umkehrmikroskop oder auch extern möglich sein kann.

Erfindungsgemäß sind Daten der Temperaturmessung über eine Funkschnittstelle an eine Steuereinheit übertragbar. Vorteilhafterweise sind zwischen Messvorrichtung und Steuereinheit keine Kabel vorgesehen, so dass Daten der Temperaturmessung über die Funkschnittstelle übertragen werden können. Die Funkübertragung ist insbesondere bei drehbaren Objektivrevolvern vorteilhaft, da ansonsten entsprechende Vorkehrungen getroffen werden müssten, um eine zuverlässige Kabelverbindung bei häufigem Drehen des Objektivrevolvers zu schaffen. Unter dem Gesichtspunkt der Nachrüstbarkeit bestehender Systeme benötigt eine kabellose Verbindung keinerlei zusätzliche Änderungen am Umkehrmikroskop.

Erfindungsgemäß ist der Messaufnehmer mit einem Mikrokontroller verbunden.

Die bereits digitalisierten Daten des Messaufnehmers werden bevorzugt mittels eines Mikrokontrollers weiterverarbeitet, wobei die Weiterverarbeitung sowohl das Zusammenstellen eines bestimmten Datenformates als auch eine Verschlüsselung umfassen kann.

Gemäß einer weiteren Ausführungsform der Erfindung sind ein oder mehrere Steuerbefehle von der Steuereinheit über die Funkschnittstelle an den Mikrokontroller übertragbar sind.

Eine bidirektionale Funkschnittstelle kann auch so ausgestaltet werden, dass Steuerbefehle an den Mikrocontroller übertragen werden können, um beispielsweise bestimmte Messvorgänge zu starten, Kalibrierungsdaten zu senden oder andere Ereignisse auslösen zu können.

Gemäß einer weiteren Ausführungsform der Erfindung ist eine Ladezustandsinformation der Stromversorgung über die Funkschnittstelle an die Steuereinheit übertragbar.

Demnach kann die Notwendigkeit eines Batteriewechsels oder eines Aufladens einer Batterie über das Steuergerät abgefragt werden, was die Benutzung deutlich vereinfacht.

Der Neigungssensor ist innerhalb des Gehäuses angeordnet, der ein Signal abgeben kann, das das Einbringen des Gehäuses in den Strahlengang des Umkehrmikroskops am ausgewählten Objektivplatz im Objektivrevolver anzeigt, sodass die Messvorrichtung vertikal ausgerichtet ist und sich unterhalb des Bodens des Kultiviergefäßes befindet.

Da ein Großteil der elektronischen Komponenten der Messvorrichtung nur während der Temperaturmessung verwendet wird, kann das Einbringen der Messvorrichtung in den Bereich unterhalb der Aufnahme am Umkehrmikroskop mittels eines Neigungssensors angezeigt werden, da diese Position oftmals einer vertikalen Längsausrichtung entspricht.

Erfindungsgemäß steuert das abgegebene Signal die Stromversorgung für den Messaufnehmer und/oder den Mikrokontroller und/oder die Funkschnittstelle so, dass bei außerhalb des Strahlengangs angeordnetem Gehäuse der Stromverbrauch minimierbar ist.

Sobald die vertikale Ausrichtung verlassen wird, erfolgt ein Herausschwenken der Messvorrichtung aus dem aktiven Objektivplatz, so dass die nun nicht mehr benötigten elektronischen Komponenten abgeschaltet werden können. Dadurch lässt sich der Stromverbrauch deutlich reduzieren, was insbesondere bei Verwendung von Batterien oder wiederaufladbaren Akkumulatoren vorteilhaft ist.

Gemäß einer weiteren Ausführungsform der Erfindung ist die Funkschnittstelle mit einer am Gehäuse angeordneten Antenne verbunden.

Die Antenne kann dabei sowohl außen am Gehäuse als auch im Inneren des Gehäuses angeordnet werden, so dass je nach gewünschter Reichweite eine ausreichende Signalstärke an der Position des Empfängers zur Verfügung steht.

Gemäß einer weiteren Ausführungsform der Erfindung ist das Aufnahmemittel mit einem Adapter so verbindbar, dass das Gehäuse in unterschiedliche Positionen am Objektivrevolver einbringbar ist.

Demnach kann die Messvorrichtung auch dann am Objektivrevolver eingebracht werden, wenn die Befestigung an unterschiedlichen Positionen verschieden gewählt ist, beispielsweise mittels unterschiedlicher Gewindeabmessungen. Ein Adapter am Aufnahmemittel kann derartige Unterschiede ausgleichen.

Gemäß einer weiteren Ausführungsform der Erfindung ist das Aufnahmemittel mit einem Adapter so verbindbar, dass das Gehäuse in Objektivrevolver unterschiedlicher Bauart einbringbar ist.

Neben der oben beschriebenen Anwendung bei unterschiedlichen Positionen eines Objektivrevolvers kann es auch vorgesehen sein, den Adapter so auszugestalten, dass unterschiedliche Objektivrevolver beispielsweise von verschiedenen Herstellern bestückt werden können. Dies erleichtert die bereits oben erwähnte Nachrüstbarkeit bestehender Systeme mit der erfindungsgemäßen Messvorrichtung.

Gemäß einer weiteren Ausführungsform der Erfindung sind Materialien an außenliegenden Flächen so gewählt, dass diese sterilisierbar sind.

Die erfindungsgemäße Messvorrichtung taucht zwar nicht mehr in die Nährlösung ein, es kann jedoch dennoch im Sinne einer Keimfreiheit der gesamten Messumgebung vorteilhaft sein, beispielsweise die außen liegenden Flächen so auszuführen, dass diese sterilisierbar sind.

Gemäß einer weiteren Ausführungsform der Erfindung ist das Gehäuse im Bereich der Oberseite mit einem Überzug versehen.

Insbesondere im Zusammenhang mit der Immersionsmikroskopie schützt ein derartiger Überzug die Messvorrichtung vor Öltröpfchen, die am Boden des Kultiviergefäßes nach einer vorhergehenden optischen Beobachtung zurückgeblieben sind.

Nachfolgend werden einige Ausführungsbeispiele anhand der Zeichnung näher erläutert. Es zeigt:
- Fig. 1: eine erfindungsgemäße Messvorrichtung in einem Umkehrmikroskop in einer perspektivischen Seitenansicht,
- Fig. 2: die Messvorrichtung aus Fig. 1 in einer schematischen Darstellung, und
- Fig. 3: die Messvorrichtung aus Fig. 1 in einer Seitenansicht.

In den Figuren sind gleiche oder funktional gleich wirkende Bauteile mit den gleichen Bezugszeichen versehen.

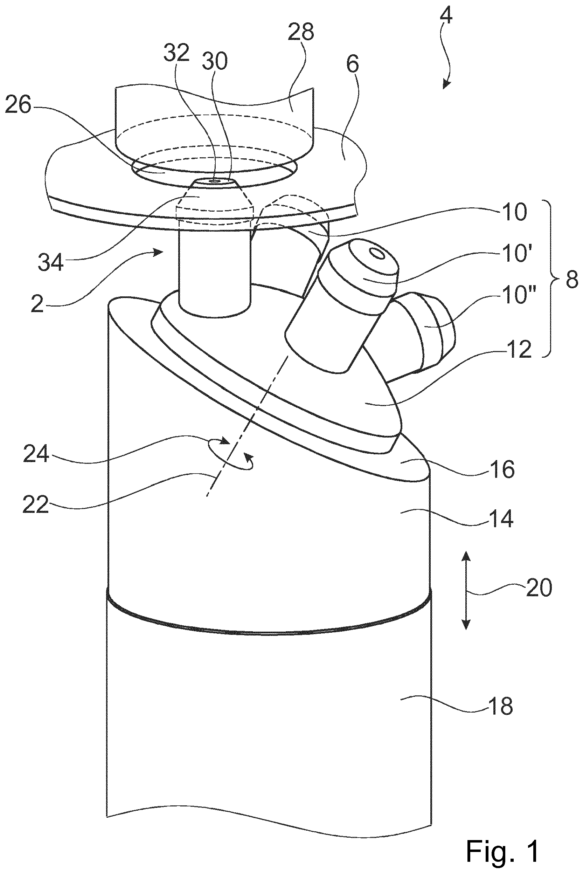

In Fig. 1 wird nachfolgend eine erste Ausführungsform einer Messvorrichtung 2 beschrieben. Fig. 1 zeigt dabei in einer perspektivischen Seitenansicht ein Teil eines Umkehrmikroskops 4, das unterhalb einer Aufnahme 6 einen Objektivrevolver 8 aufweist.

Der Objektivrevolver 8 umfasst im gezeigten Beispiel drei Objektive 10, 10', 10", die jeweils auf einer Grundplatte 12 des Objektivrevolvers 8 angeordnet sind. Anstelle eines vierten Objektivs ist erfindungsgemäß die Messvorrichtung 2 in die Grundplatte 12 eingesetzt. Der Objektivrevolver 8 ist an einem Oberteil 14 an einer Schrägfläche 16 angeordnet, wobei das Oberteil 14 relativ zu einem Unterteil 18 entlang einer vertikalen z-Richtung höhenverstellbar ist, wie durch die Verschieberichtung 20 in Fig. 1 angedeutet ist.

Desweiteren ist der Objektivrevolver 8 relativ zu einer Drehachse 22 entlang einer Umfangsrichtung 24 drehbar, so dass ausgewählt werden kann, welches der drei Objektive 10, 10', 10" bzw. Messvorrichtung 2 unterhalb einer Öffnung 26 zu liegen kommt. Die Drehung um die Drehachse 22 kann dabei mittels eines Stellmotors oder aber auch manuell durch eine Benutzerin oder einen Benutzer vorgenommen werden. Über die Lageveränderung in z-Richtung entlang der Verschieberichtung 20 kann daher die fachübliche Beobachtung von Zell- und/oder Gewebekulturen in einer oberhalb der Öffnung 26 auf der Aufnahme 6 befindlichen Kultiviergefäß 28 mittels der drei Objektive 10, 10', 10" vorgenommen werden.

Anstelle der Beobachtung mittels der Objektive 10, 10', 10" ist jedoch auch eine Temperaturmessung mittels der Messvorrichtung 2 möglich, wie nachfolgend detailliert erläutert wird. Dazu wird die Messvorrichtung 2 in eine aktive Position, d. h. im gezeigten Beispiel in eine vertikale Ausrichtung bezüglich ihrer Längsachse gebracht, so dass diese unterhalb der Öffnung 26 zu liegen kommt. Die Oberseite 30 der Messvorrichtung 2 wird dabei so unterhalb des Kultiviergefäßes 28 angeordnet, dass ein Abstand zwischen der Oberseite 30 und dem Boden des Kultiviergefäßes 28 minimal wird. Die Oberseite 30 der Messvorrichtung 2 kann dabei vorteilhaft konisch geformt sein, wie mittels Konusfläche 34 in Fig. 1 angedeutet ist. Über ein Messfenster 32 erfolgt nun berührungslos eine Temperaturmessung des Bodens des Kultiviergefäßes 28, die üblicherweise der Temperatur einer im Kultiviergefäß 28 befindlichen Nährlösung entspricht. Folglich ist kein direkter Kontakt zwischen Messvorrichtung 2 und Nährlösung im Kultiviergefäß 28 notwendig, so dass neben einem unerwünschten Eintrag von Keimen auch keine Verdunstungskälte auftreten kann, die das Messergebnis verfälschen könnte.

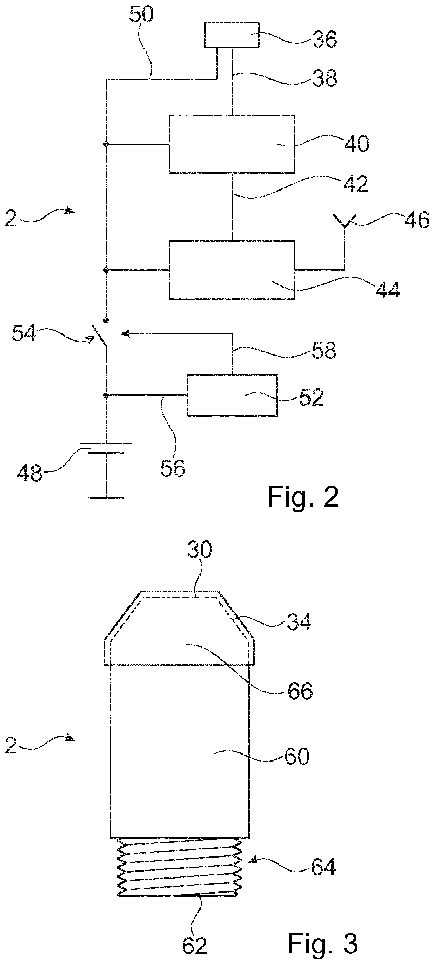

In Fig. 2 ist schematisch der Aufbau der Messvorrichtung 2 nochmals genauer dargestellt. Die Messvorrichtung 2 umfasst einen Messaufnehmer 36, der eine berührungslose Temperaturmessung ermöglicht. Derartige Sensoren sind an sich bekannt und werden entweder Thermosäulen-Sensor oder dem englischen Sprachgebrauch folgend Thermopile-Sensor genannt. Der Messaufnehmer 36 umfasst neben dem Temperatur-Sensor auch eine Auswerteelektronik, so dass über eine Verbindungsleitung 38 Temperaturinformation in digitaler Form an einen Mikrocontroller 40 weitergegeben werden kann. Der Mikrocontroller 40 ist so eingerichtet, dass die Temperaturinformation in ein geeignetes Datenformat umgesetzt sowie gegebenenfalls verschlüsselt wird, so dass Ausgangsdaten über eine weitere Verbindungsleitung 42 an eine Funkschnittstelle 44 übertragen werden können, so dass diese von dort über eine Antenne 46 drahtlos an einen nicht in Fig. 2 dargestellten Empfänger weitergeleitet werden können, der beispielsweise Bestandteil einer Steuereinheit sein kann. Auf der Empfangsseite werden die Daten entschlüsselt. Anschließend können die Daten entweder an ein Anzeigegerät weitergeleitet werden oder zur weiteren Verarbeitung beispielsweise einem Temperaturregelgerät zugeführt werden.

Die Übertragung mittels der Funkschnittstelle 44 kann dabei auch bidirektional erfolgen, so dass beispielsweise von der Steuereinheit Steuerbefehle an den Mikrocontroller 40 übertragen werden können, die beispielsweise einen Messvorgang mittels des Messaufnehmers 36 einleiten können.

Die Stromversorgung der Messvorrichtung 2 erfolgt dabei über eine gegebenenfalls wieder aufladbare Batterie als Stromversorgung 48, die sowohl permanent mit einer internen Versorgungsleitung 50 verbindbar ist oder aber, wie in Fig. 2 gezeigt ist, über einen von einem Neigungssensor 52 angesteuerten Schalter 54 mit der internen Versorgungsleitung 50 verbunden ist. Der Neigungssensor 52 wird dabei über eine eigene weitere Versorgungsleitung 56 permanent mit Strom versorgt, so dass ein Aus- bzw. Einschalten der übrigen Komponenten der Messvorrichtung 2 mittels des Steuersignals 58 erfolgen kann, wie nachfolgend näher erläutert wird.

Die Messvorrichtung 2 soll, wie bereits im Zusammenhang mit Fig. 1 erläutert, nur dann aktiv sein, wenn sich die Messvorrichtung 2 unterhalb des Bodens des Kultiviergefäßes 28 befindet. Dazu muss der Objektivrevolver 8 so ausgerichtet sein, dass sich die Messvorrichtung 2 bezüglich ihrer Längsachse in einer vertikalen Position befindet. Mittels des Neigungssensors 52 lässt sich folglich die Ausrichtung der Messvorrichtung 2 bestimmen, so dass bei Erreichen der vertikalen Position das Steuersignal 58 über den Schalter 54 die übrigen Komponenten der Messvorrichtung 2 aktivieren kann. Sobald die Messvorrichtung 2 aus der vertikalen Position entfernt wird, d. h. eines der Objektive 10, 10', 10" unterhalb der Öffnung 26 gedreht wird, muss keine Temperaturmessung mehr erfolgen, so dass die übrigen Bestandteile abgeschaltet werden können. In einer weiteren Ausführungsform ist die Messvorrichtung 2 so ausgestaltet, dass ein Ladezustand der Batterie als Stromversorgung 48 über die Funkschnittstelle 44 ausgelesen werden kann, so dass ein Aufladevorgang oder ein Austauschen der Batterie zur Stromversorgung 48 eingeleitet werden kann.

In Fig. 3 ist die Messvorrichtung 2 nochmals einzeln dargestellt. Die Messvorrichtung 2 umfasst ein Gehäuse 60, in dessen Inneren die im Zusammenhang mit Fig. 2 beschriebenen elektronischen Komponenten untergebracht sind. Auf der der Oberseite 30 gegenüberliegenden Unterseite 62 ist ein Aufnahmemittel 64 vorgesehen, das so ausgebildet ist, dass es in die Grundplatte 12 des Objektivrevolvers 8 eingeführt werden kann.

Wie in Fig. 3 dargestellt ist, kann es sich bei dem Aufnahmemittel 64 um ein Außengewinde handeln, so dass eine Befestigung in einem korrespondierenden Innengewinde der Grundplatte 12 möglich ist. Um jedoch eine Verwendung der Messvorrichtung bei möglichst vielen Umkehrmikroskopen zu ermöglichen, kann das Aufnahmemittel auch in Form eines Adapters ausgeführt sein, so dass die Messvorrichtung in Objektivrevolver unterschiedlicher Bauart oder auch in unterschiedliche Positionen mit anderen Gewindeabmessungen eingebracht werden kann.

Desweiteren ist an der Oberseite 30 des Gehäuses 60 ein Überzug 66 vorgesehen, der beispielsweise als dünne elastische Kunststofffolie ausgeführt sein kann. Der Überzug 66 schützt den Messaufnehmer 36 bei Verwendung der Messvorrichtung im Zusammenhang mit Immersionsobjektiven, da andernfalls Reste von Öl in das Innere des Gehäuses 60 durch das Messfenster 32 gelangen könnten. Der Überzug 66 befindet sich typischerweise in Kontakt zum Boden des Kultiviergefäßes 28, so dass ein Temperaturausgleich zwischen Kultiviergefäß 28 und Überzug 66 erreicht wird, was Voraussetzung für eine berührungslose Temperaturmessung ist.

Die erfindungsgemäße Lösung stellt somit im Inneren der Messvorrichtung 2 den Messaufnehmer 36 bereit, der anstelle eines Objektivs in dem Objektivrevolver 8 angeordnet werden kann. Die zusätzliche Temperaturmessung erfordert das Aufgeben eines an sich für ein Objektiv vorgesehenen Platzes im Objektivrevolver, so dass dieser nicht durch ein Objektiv belegt werden kann. Die dabei erzielten Vorteile der berührungslosen Temperaturmessung erzielen hierbei jedoch eine ausreichende Kompensation bezüglich neuer Anwendungsmöglichkeiten und verbesserter Temperaturmessung.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Die Erfindung wird durch die nachfolgenden Ansprüche definiert.

### Liste der Bezugszeichen

- 2: Messvorrichtung
- 4: Umkehrmikroskop
- 6: Aufnahme
- 8: Objektivrevolver
- 10: Objektive
- 12: Grundplatte
- 14: Oberteil
- 16: Schrägfläche
- 18: Unterteil
- 20: Verschieberichtung
- 22: Drehachse
- 24: Umfangsrichtung
- 26: Öffnung
- 28: Kultiviergefäß
- 30: Oberseite
- 32: Messfenster
- 34: Konusfläche
- 36: Messaufnehmer
- 38: Verbindungsleitung
- 40: Mikrocontroller
- 42: weitere Verbindungsleitung
- 44: Funkschnittstelle
- 46: Antenne
- 48: Stromversorgung
- 50: Versorgungsleitung
- 52: Neigungssensor
- 54: Schalter
- 56: weitere Versorgungsleitung
- 58: Steuersignal
- 60: Gehäuse
- 62: Unterseite
- 64: Aufnahmemittel
- 66: Überzug

## Patentansprüche

1. Messvorrichtung, umfassend
- eine Funkschnittstelle (44), über die Daten einer berührungslosen Temperaturmessung an eine Steuereinheit übertragbar sind;
- einen Mikrokontroller (40), der mit einem Messaufnehmer (36) verbunden ist;
- ein Gehäuse (60), wobei
eine Unterseite (62) des Gehäuses (60) ein Aufnahmemittel (64) zur Befestigung an einem für ein Objektiv (10) vorgesehenen Objektivplatz in einem beweglichen und höhenverstellbaren Objektivrevolver (8) eines Umkehrmikroskops aufweist und die an einer der Unterseite (62) gegenüberliegenden Oberseite (30) mit dem Messaufnehmer (36) innerhalb des Gehäuses (60) ausgestattet ist, mittels dessen die berührungslose Temperaturmessung an einem Boden eines Kultiviergefäßes (28) durchführbar ist, sofern das Gehäuse (60) am ausgewählten Objektivplatz im Objektivrevolver (8) in einen Strahlengang des Umkehrmikroskops (4) gebracht ist, sodass die Messvorrichtung vertikal ausgerichtet ist und sich unterhalb des Bodens des Kultiviergefäßes (28) befindet,
wobei ein Neigungssensor (52) innerhalb des Gehäuses (60) angeordnet ist, der ein Signal abgeben kann, das das Einbringen des Gehäuses (60) in den Strahlengang des Umkehrmikroskops (4) am ausgewählten Objektivplatz im Objektivrevolver (8) anzeigt, wenn die Messvorrichtung vertikal ausgerichtet ist und sich unterhalb des Bodens des Kultiviergefäßes (28) befindet, wobei das abgegebene Signal die Stromversorgung für den Messaufnehmer (36) und/oder den Mikrokontroller (40) und/oder die Funkschnittstelle (44) so steuert, dass bei außerhalb des Strahlengangs angeordnetem Gehäuse (60), wenn die Messvorrichtung die vertikale Ausrichtung verlassen hat, der Stromverbrauch minimierbar ist, indem nicht mehr benötigte Komponenten abgeschaltet werden.

2. Messvorrichtung nach Anspruch 1, bei der das Gehäuse (60) auf seiner Oberseite (30) so konisch ausgeführt ist, dass ein Abstand zwischen dem Boden des Kultiviergefäßes (28) und dem Messaufnehmer (36) mittels des höhenverstellbaren Objektivrevolvers (8) minimierbar ist.

3. Messvorrichtung nach einem der Ansprüche 1 und 2, bei der im Inneren des Gehäuses (60) eine Stromversorgung (48) in Form einer Batterie oder eines Akkus angeordnet ist.

4. Messvorrichtung nach einem der vorherigen Ansprüche, bei der ein oder mehrere Steuerbefehle von der Steuereinheit über die Funkschnittstelle (44) an den Mikrokontroller (40) übertragbar sind.

5. Messvorrichtung nach einem der Ansprüche 3 bis 4, bei der eine Ladezustandsinformation der Stromversorgung (48) über die Funkschnittstelle (44) auslesbar ist und an die Steuereinheit übertragbar ist.

6. Messvorrichtung nach einem der Ansprüche 1 bis 5, wobei der Neigungssensor über eine eigene Verbindungsleitung permanent mit Strom versorgt wird und nicht abgeschaltet wird.

7. Messvorrichtung nach einem der vorherigen Ansprüche, bei der die Funkschnittstelle (44) mit einer am Gehäuse (60) angeordneten Antenne (46) verbunden ist.

8. Messvorrichtung nach einem der Ansprüche 1 bis 7, bei der das Aufnahmemittel (64) mit einem Adapter so verbindbar ist, dass das Gehäuse (60) in unterschiedliche Positionen am Objektivrevolver (8) einbringbar ist.

9. Messvorrichtung nach einem der Ansprüche 1 bis 8, bei der das Aufnahmemittel (64) mit einem Adapter so verbindbar ist, dass das Gehäuse (60) in Objektivrevolver (8) unterschiedlicher Bauart einbringbar ist.

10. Messvorrichtung nach einem der Ansprüche 1 bis 9, bei der Materialien an außenliegenden Flächen so gewählt sind, dass diese sterilisierbar sind.

11. Messvorrichtung nach einem der Ansprüche 1 bis 10, bei der das Gehäuse (60) im Bereich der Oberseite (30) mit einem Überzug (66) versehen ist.

## Claims

1. Measuring device comprising
- a radio interface (44) via which data of a contactless temperature measurement can be transmitted to a control unit;
- a microcontroller (40) which is connected to a measuring sensor (36);
- a housing (60), wherein a lower side (62) of the housing (60) has a connector (64) which provides a fixing point for an objective (10) in a movable and height-adjustable objective revolving nosepiece (8) of an inverted microscope, and which is equipped with the measuring sensor (36) within the housing (60) on an upper side (30) opposite the lower side (62), by means of which the contactless temperature measurement can be carried out on a bottom of a culture vessel (28), provided that the housing (60) is brought into a beam path of the inverted microscope (4) at the selected objective position in the revolving nosepiece (8), so that the measuring device is aligned vertically and is located below the bottom of the culture vessel (28), wherein a tilt sensor (52) is disposed within the housing (60) and is capable of emitting a signal indicating the moving of the housing (60) into the beam path of the inverted microscope (4) at the selected objective location in the revolving nosepiece (8) when the measuring device is vertically aligned and is located below the bottom of the culture vessel (28), wherein the emitted signal controls the power supply to the measuring sensor (36) and/or the microcontroller (40) and/or the radio interface (44) in such a way that, when the housing (60) is located outside the beam path and the measuring device has left the vertical orientation, the power consumption can be minimised by switching off components which are no longer required.

2. Measuring device according to claim 1, wherein the housing (60) is conical on its upper side (30) in such a way that a distance between the bottom of the culture vessel (28) and the measuring sensor (36) can be minimised by means of the height-adjustable objective revolving nosepiece (8).

3. Measuring device according to one of claims 1 and 2, wherein a power supply (48) in the form of a battery or accumulator is arranged inside the housing (60).

4. Measuring device according to any one of the preceding claims, wherein one or more control commands are transmittable from the control unit to the microcontroller (40) via the radio interface (44).

5. Measuring device according to any one of claims 3 to 4, wherein charge state information of the power supply (48) is readable via the radio interface (44) and is transmittable to the control unit.

6. Measuring device according to one of the claims 1 to 5, wherein the tilt sensor is permanently supplied with power via its own connection line and is not switched off.

7. Measuring device according to any one of the preceding claims, wherein the radio interface (44) is connected to an antenna (46) arranged on the housing (60).

8. Measuring device according to any one of claims 1 to 7, wherein the connector (64) is combinable to an adapter in such a way that the housing (60) is insertable into different positions on the objective revolving nosepiece (8).

9. Measuring device according to one of the claims 1 to 8, in which the connector (64) can be connected to an adapter in such a way that the housing (60) can be brought into objective revolving nosepieces (8) of different designs.

10. Measuring device according to any one of claims 1 to 9, in which materials on external surfaces are selected so that they can be sterilised.

11. Measuring device according to one of claims 1 to 10, in which the housing (60) is provided with a coating (66) on the upper side (30).

## Revendications

1. Dispositif de mesure, comprenant
- une interface radio (44), par laquelle les données d'une mesure de température sans contact peuvent être transmises à une unité de commande;
- un microcontrôleur (40), qui est relié à un capteur de mesure (36) ;
- un boîtier (60), une face inférieure (62) du boîtier (60) présentant un connecteur (64) pour la fixation à un emplacement d'objectif prévu pour un objectif (10) dans une tourelle porte-objectifs (8) mobile et réglable en hauteur d'un microscope à inversion et qui est équipée, sur une face supérieure (30) opposée à la face inférieure (62), du capteur de mesure (36) à l'intérieur du boîtier (60), au moyen duquel la mesure de température sans contact peut être effectuée sur le fond d'un récipient de culture (28), dans la mesure où le boîtier (60) est amené dans une trajectoire de faisceau du microscope à inversion (4) à l'emplacement d'objectif sélectionné dans la tourelle porte-objectifs (8), de sorte que le dispositif de mesure est orienté verticalement et se trouve en dessous du fond du récipient de culture (28), et un capteur d'inclinaison (52) est disposé à l'intérieur du boîtier (60), lequel peut émettre un signal qui indique l'introduction du boîtier (60) dans le trajet optique du microscope inversé (4) à l'emplacement sélectionné de l'objectif dans la tourelle porte-objectifs (8) lorsque le dispositif de mesure est orienté verticalement et se trouve en dessous du fond du récipient de culture (28), et le signal émis commande l'alimentation électrique du capteur de mesure (36) et/ou du microcontrôleur (40) et/ou de l'interface radio (44) de telle sorte que, lorsque le boîtier (60) est placé en dehors du trajet des rayons, lorsque le dispositif de mesure a quitté l'orientation verticale, la consommation électrique peut être minimisée en coupant les composants qui ne sont plus nécessaires.

2. dispositif de mesure selon la revendication 1, dans lequel le boîtier (60) est réalisé de manière conique sur sa face supérieure (30) de telle sorte qu'une distance entre le fond du récipient de culture (28) et le capteur de mesure (36) peut être minimisée au moyen de la tourelle porte-objectifs (8) réglable en hauteur.

3. Dispositif de mesure selon l'une des revendications 1 et 2, dans lequel une alimentation électrique (48) sous forme de pile ou d'accumulateur est disposée à l'intérieur du boîtier (60).

4. Dispositif de mesure selon l'une des revendications précédentes, dans lequel une ou plusieurs instructions de commande peuvent être transmises par l'unité de commande au microcontrôleur (40) via l'interface radio (44).

5. Dispositif de mesure selon l'une des revendications 3 à 4, dans lequel une information d'état de charge de l'alimentation électrique (48) peut être lue via l'interface radio (44) et transmise à l'unité de commande.

6. Dispositif de mesure selon l'une des revendications 1 à 5, dans lequel le capteur d'inclinaison est alimenté en permanence par une ligne de connexion propre et n'est pas déconnecté.

7. Dispositif de mesure selon l'une des revendications précédentes, dans lequel l'interface radio (44) est reliée à une antenne (46) disposée sur le boîtier (60).

8. Dispositif de mesure selon l'une des revendications 1 à 7, dans lequel le connecteur (64) peut être relié à un adaptateur de manière à ce que le boîtier (60) puisse être placé dans différentes positions sur la tourelle porte-objectifs (8).

9. Dispositif de mesure selon l'une des revendications 1 à 8, dans lequel le connecteur (64) peut être relié à un adaptateur de manière à ce que le boîtier (60) puisse être monté sur des tourelles porte-objectifs (8) de différents types.

10. Dispositif de mesure selon l'une des revendications 1 à 9, dans lequel les matériaux des surfaces extérieures sont choisis de manière à pouvoir être stérilisés.

11. Dispositif de mesure selon l'une des revendications 1 à 10, dans lequel le boîtier (60) est recouvert d'un revêtement (66) sur la partie de la face supérieure (30).
